# EUROPÄISCHE PATENTSCHRIFT

(11) **EP 3 534 121 B1**
(45) Veröffentlichungstag und Bekanntmachung des Hinweises auf die Patenterteilung: **27.01.2021**
(21) Anmeldenummer: 18159633.9
(22) Anmeldetag: 02.03.2018
(51) Int. Cl.: G01D 5/20, G01D 11/24

(54) **MULTITURN-DREHGEBER**
MULTI-TURN ROTARY ENCODER
CAPTEUR DE ROTATION MULTITOUR

(43) Veröffentlichungstag der Anmeldung: 04.09.2019
(73) Patentinhaber: Dr. Johannes Heidenhain GmbH, 83301 Traunreut (DE)
(72) Erfinder: HEINEMANN, Christoph, 83349 Palling (DE); TIEMANN, Marc Oliver, 83329 Waging am See (DE)

(56) Entgegenhaltungen:
- EP-A2- 1 391 696
- DE-A1-102016 213 697
- US-A1- 2004 078 166
- US-A1- 2016 341 574

## Beschreibung

### GEBIET DER TECHNIK

Multiturn-Drehgeber, häufig auch als Multiturn-Winkelmessgeräte bezeichnet, dienen zur Messung von Drehbewegungen einer Welle über mehrere Umdrehungen hinweg. In Verbindung mit Zahnstangen oder Gewindespindeln lassen sich mit Multiturn-Drehgebern auch lineare Bewegungen messen. Multi-turn-Drehgeber werden insbesondere bei Werkzeugmaschinen, Industrierobotern oder Bearbeitungszentren eingesetzt.

In derartigen Multiturn-Drehgebern werden oft durch Untersetzungsgetriebe die Drehbewegungen der zu messenden Welle auf Drehbewegungen von winkelcodierten Getrieberädern übertragen, die sich mit entsprechend geringerer Drehzahl bewegen. Auf diese Weise kann die Drehstellung der Welle über eine Vielzahl von Umdrehungen bestimmt werden. Die Drehstellungen sowohl der Welle selbst, als auch die der untersetzt angetriebenen Getrieberäder können beispielsweise mit Hilfe induktiver Sensoren bestimmt werden.

Bei induktiven Sensoren werden häufig Erregerwindungen und Detektorwindungen in Form von Leiterbahnen auf einer gemeinsamen Leiterplatte aufgebracht, die beispielsweise mit einem Stator eines Drehgebers fest verbunden ist. Dieser Leiterplatte gegenüber befindet sich eine weitere Platine, auf der in periodischen Abständen elektrisch leitende Flächen als Teilungsstruktur aufgebracht sind und welche mit dem Rotor des Drehgebers drehfest verbunden ist. Wenn an den Erregerwindungen ein elektrisches Erregerfeld angelegt wird, werden in den Detektorwindungen während der Relativdrehung zwischen Rotor und Stator von der Winkellage abhängige Signale erzeugt. Diese Signale werden dann in einer Auswerteelektronik weiterverarbeitet.

Bei optischen Messeinrichtungen sind häufig Lichtquellen und Fotodetektoren auf einer Leiterplatte eines optischen Sensors montiert. Mit einem Luftspalt der Leiterplatte gegenüber liegend befindet sich eine optische Skalierung. Nach bekannten Prinzipien können dann von der Position abhängige Signale erzeugt werden.

Häufig werden derartige Multiturn-Drehgeber für elektrische Antriebe, zur Bestimmung der Relativbewegung bzw. der Relativlage von entsprechenden Maschinenteilen, eingesetzt. In diesem Fall werden die erzeugten Positionswerte einer Folgeelektronik zur Ansteuerung der Antriebe über eine entsprechende Schnittstellenanordnung zugeführt.

### STAND DER TECHNIK

In der DE 10 2005 050 016 A1 wird ein nach dem induktiven Prinzip arbeitender Multiturn-Drehgeber beschrieben, bei welchem Zahnräder eines Getriebes an einer Leiterplatte befestigt sind.

Aus der Druckschrift US 2016 / 341574 A1 ist ein Multi-Turn Detektor bekannt, welcher eine Edelstahlscheibe aufweist, auf der eine Leiterplatte mit Detektionswindungen angeordnet ist. Auf der Leiterplatte sind auch elektronische Bauelemente montiert. Zudem umfasst der Multi-Turn Detektor ein Getriebe mit mehreren Zahnrädern.

In der Offenlegungsschrift DE 10 2016 312 697 A1 wird eine gestapelte oder gefaltete Leiterplattenanordnung beschrieben, die elektrische oder elektronische Bauelemente etwa ICs, Widerstände oder Kondensatoren aufweist.

Diese sind von einer Kapselung, zum Beispiel eine Verguss- oder Umspritzmasse umhüllt.

### ZUSAMMENFASSUNG DER ERFINDUNG

Der Erfindung liegt die Aufgabe zugrunde einen Multiturn-Drehgeber zu schaffen, der ein gegenüber äußeren Einflüssen robustes Betriebsverhalten ermöglicht und vergleichsweise wirtschaftlich herstellbar ist.

Diese Aufgabe wird erfindungsgemäß durch die Merkmale des Anspruches 1 gelöst.

Der Multiturn-Drehgeber ist zur Messung einer Winkelstellung einer Welle geeignet, die um eine Achse drehbar ist. An der Welle ist drehfest eine erste Winkelskala befestigt, die von einem ersten Detektor abtastbar ist (Singleturn-Abtastung). Der Multiturn-Drehgeber weist weiterhin ein Getriebe, einen Metallkörper und eine Leiterplatte auf. Die Leiterplatte weist einen ersten Bereich auf, in dem der erste Detektor angeordnet ist und einen zweiten Bereich, in dem elektronische Bauelemente angeordnet sind, welche elektrisch mit dem ersten Detektor verbunden sind, insbesondere durch Leiterbahnen auf der Leiterplatte. Der Metallkörper ist zumindest zweilagig aufgebaut, wobei einer ersten Lage eine erste Fläche beziehungsweise Oberfläche zugeordnet werden kann und einer zweiten Lage eine zweite Fläche beziehungsweise Oberfläche. Der Metallkörper weist demnach eine erste Lage mit einer ersten Fläche sowie eine zweite Lage mit einer zweiten Fläche auf. Weiterhin weist der Metallkörper zumindest eine Ausnehmung auf. Der erste Bereich der Leiterplatte ist auf der ersten Fläche befestigt und der zweite Bereich der Leiterplatte auf der zweiten Fläche. Die erste Lage und die zweite Lage des Metallkörpers sind zwischen dem ersten Bereich der Leiterplatte und dem zweiten Bereich der Leiterplatte angeordnet, so dass der erste Bereich der Leiterplatte in einer ersten Ebene und der zweite Bereich der Leiterplatte in einer zweiten Ebene angeordnet sind. Das Getriebe ist von der Welle antreibbar, wobei dieses zumindest ein abtriebsseitiges, also letztlich von der Welle angetriebenes, Getrieberad aufweist, welches über seine axiale Ausdehnung hinweg zumindest teilweise innerhalb der Ausnehmung angeordnet ist, wobei sich die Ausnehmung bezogen auf die axiale Richtung zwischen der ersten Ebene und der zweiten Ebene befindet.

Mit Vorteil weist die erste Lage die Ausnehmung auf. Alternativ oder ergänzend kann die zweite Lage die Ausnehmung aufweisen. Es können also auch Bauweisen vorliegen, bei denen beide Lagen eine oder mehrere Ausnehmungen aufweisen. Mit Vorteil ist die axiale Ausdehnung des ersten und / oder zweiten Getrieberades kleiner oder gleich der axialen Ausdehnung des Metallkörpers. Insbesondere kann die axiale Ausdehnung des ersten und / oder zweiten Getrieberades kleiner oder gleich der Dicke der ersten und / oder der zweiten Lage des Metallkörpers sein.

In weiterer Ausgestaltung der Erfindung weist das Getriebe zumindest ein erstes Getrieberad und ein zweites Getrieberad auf, wobei letzteres eine Winkelteilung aufweist und das zweite Getrieberad weiterhin über seine axiale Ausdehnung hinweg zumindest teilweise innerhalb der Ausnehmung angeordnet ist.

Vorteilhafterweise weist das Getriebe zumindest jeweils ein erstes Getrieberad und ein zweites Getrieberad auf, wobei das erste Getrieberad und das zweite Getrieberad jeweils als ein Zahnrad, insbesondere als ein Stirnrad, ausgebildet sind. Alternativ kann auch beispielsweise ein magnetisches Getriebe verwendet werden. Insbesondere kann diejenige Getriebestufe, die unmittelbar von der Welle angetrieben wird (erste Getriebestufe) ein magnetisches Getrieberad aufweisen. Weiterhin können das erste Getrieberad und das zweites Getrieberad, welches die Winkelteilung aufweist, in einem Körper in integraler Bauweise angeordnet sein.

Gemäß einer Weiterbildung der Erfindung ist am Metallkörper in der zumindest einen Ausnehmung ein Zapfen angeformt, der zur Lagerung eines Getrieberads dient. Insbesondere ist der Zapfen als integraler Bestandteil des Metallkörpers ausgebildet und beispielsweise spanabhebend hergestellt beziehungsweise aus dem Metallkörper herausgearbeitet.

Weiterhin kann zumindest ein zweites Getrieberad eine Winkelteilung aufweisen, wobei dann das Getriebe derart konfiguriert ist, dass bei drehender Welle die Drehzahl des zweiten Getrieberads kleiner ist als die Drehzahl der Welle.

Der Multiturn-Drehgeber kann beispielsweise auf einem optischen Prinzip beruhen, so dass dann der erste Detektor (für die Singleturn-Abtastung) in Form eines Fotodetektors beziehungsweise Fotodetektorarrays ausgebildet sein kann. Alternativ kann der Multiturn-Drehgeber auf einem magnetischen Prinzip beruhen, wobei dann der erste Detektor für die Singleturn-Abtastung in Form eines oder mehrerer magnetoresistiven Elemente oder Hall-Elemente ausgebildet sein kann. Ebenso umfasst die Erfindung auch einen Multiturn-Drehgeber der auf einem kapazitiven Prinzip beruht. Mit Vorteil basiert der Multiturn-Drehgeber auf einem induktiven Messprinzip, wobei dann der erste Detektor für die Singleturn-Abtastung in Form von Empfängerspulen ausgebildet sein kann. In diesem Fall kann der Multiturn-Drehgeber als induktiver Multiturn-Drehgeber bezeichnet werden.

Besonders wenn der Multiturn-Drehgeber auf einem induktiven Messprinzip beruht, ist es vorteilhaft wenn der Metallkörper aus einem ferromagnetischen, insbesondere weichmagnetischen, Stahl hergestellt ist. Alternativ kann beispielsweise auch Aluminium als Material für den Metallkörper verwendet werden.

Mit Vorteil sind bei einem Multiturn-Drehgeber, der auf einem induktiven Messprinzip beruht, im ersten Bereich der Leiterplatte Erregerwindungen angeordnet. Insbesondere können dann im zweiten Bereich elektronische Bauelemente angeordnet sein, welche elektrisch mit den Erregerwindungen verbunden sind, so dass die von den betreffenden Bauelementen erzeugten Erregerströme in die Erregerwindungen übertragen werden können.

In weiterer Ausgestaltung der Erfindung ist der Metallkörper einstückig ausgestaltet und weist einen flexiblen Steg auf, der gebogen verläuft und die erste Lage mit der zweiten Lage verbindet.

Vorteilhafterweise ist die Leiterplatte flexibel und einstückig ausgestaltet, wobei die Leiterplatte zudem einen gebogenen Verbindungssteg zwischen dem ersten Bereich und dem zweiten Bereich aufweist. Mit Vorteil ist die Leiterplatte mehrschichtig aufgebaut. Besonders vorteilhaft ist es, wenn die Leiterplatte Polyimid- oder Epoxy-Material umfasst. In vorteilhafter Ausgestaltung der Erfindung weist die Leiterplatte eine Dicke von weniger als 200 µm, insbesondere weniger als 120 µm auf, wobei hier insbesondere auf die Dicke des Substrats der Leiterplatte Bezug genommen wird und keinesfalls auf die Höhe der auf der Leiterplatte montierten Bauelemente.

Mit Vorteil weist zumindest ein zweites Getrieberad eine Winkelteilung auf, so dass dessen Winkelstellung durch einen zweiten Detektor (Multiturn-Abtastung), welcher auf einem induktiven Messprinzip basiert, bestimmbar ist. Die Abtastung der jeweiligen Winkelteilung kann jeweils mit einem zweiten Detektor vorgenommen, welcher nach den im Zusammenhang mit der Singleturn-Abtastung beschriebenen Prinzipien, insbesondere alternativ zum induktiven Abtastprinzip nach einem magnetischen Prinzip, erfolgen kann.

In weiterer Ausgestaltung der Erfindung weist der Metallkörper eine Dicke von mehr als 0,5 mm, insbesondere von mehr als 1,0 mm, mit Vorteil mehr als 1,5 mm auf.

Insbesondere weist die erste Lage des Metallkörpers eine dritte Fläche beziehungsweise Oberfläche auf und die zweite Lage des Metallkörpers weist eine vierte Fläche beziehungsweise Oberfläche auf. Die dritte Fläche und die vierte Fläche sind einander zugewandt angeordnet. Insbesondere sind die erste Fläche und die dritte Fläche der ersten Lage des Metallkörpers gegenüberliegend zueinander angeordnet. Ebenso sind die zweite Fläche und die vierte Fläche, die jeweils der zweiten Lage des Metallkörpers zugeordnet sind, gegenüberliegend zueinander angeordnet.

Vorteilhafterweise sind die erste Fläche, die zweite Fläche, die dritte Fläche, und die vierte Fläche des Metallkörpers beziehungsweise der Lagen des Metallkörpers parallel zueinander angeordnet.

Mit Vorteil weist der Metallkörper weiterhin Befestigungsmittel zur mechanischen Befestigung des Multiturn-Drehgebers an einem Maschinenteil auf. Gemäß einer weiteren Ausgestaltung ist das Befestigungsmittel als eine Bohrung durch die erste Lage und / oder die zweite Lage des Metallkörpers ausgestaltet. Insbesondere kann der Metallkörper also nicht nur Träger der Leiterplatte sein, sondern gleichzeitig auch eine Flanschfunktion erfüllen. Beispielsweise können auskragende Laschen mit Bohrungen vorgesehen sein, die zur Befestigung des Multiturn-Drehgebers an einem Maschinenteil dienen.

In weiterer Ausgestaltung der Erfindung ist zwischen der ersten Lage und der zweiten Lage des Metallkörpers ein Klebespalt angeordnet, also ein Spalt, der mit Klebstoff ausgefüllt ist. Sofern ein Klebespalt vorliegt, sind insbesondere die dritte Fläche und die vierte Fläche durch den Klebespalt voneinander beabstandet. Der Klebespalt ist also insbesondere zwischen der dritten Fläche und der vierten Fläche angeordnet.

Die Lagen des Metallkörpers sind folglich durch eine Klebefügung stoffschlüssig miteinander verbunden. Alternativ können die Lagen des Metallkörpers miteinander verlötet sein, so dass insbesondere zwischen der ersten Lage und der zweiten Lage des Metallkörpers ein Lotmaterial angeordnet ist. Alternativ können die Lagen des Metallkörpers auch miteinander verschweißt sein.

Die Erfindung umfasst aber auch eine alternative Bauweise, bei der kein Klebespalt zwischen der ersten Lage und der zweiten Lage des Metallkörpers vorliegt und bei der die Lagen des Metallkörpers durch eine Umspritzung insbesondere mit einem Kunststoff oder mit einem Silikonwerkstoff zusammengehalten werden. Bei dieser Bauweise kann also der Metallkörper durch Faltung zusammen mit der Leiterplatte hergestellt werden und in diesem Zustand umspritzt werden.

Zwischen der ersten Lage und der zweiten Lage des Metallkörpers kann eine thermisch isolierende Schicht vorgesehen sein. Insbesondere bei dieser Bauweise kann nur die erste Lage oder nur die zweite Lage das Befestigungsmittel aufweisen. Wenn beispielsweise Komponenten im ersten Bereich der Leiterplatte relativ temperaturunempfindlich sind, kann die erste Lage an einem vergleichsweise heißem Bauteil befestigt werden, wobei ein Wärmefluss zur zweiten Lage und damit auf möglicherweise temperaturempfindlichere Bauelemente auf dem zweiten Bereich der Leiterplatte durch die isolierende Schicht behindert werden kann.

Weiterhin kann der Metallkörper so ausgestaltet sein, dass dieser eine Kontur aufweist, die mechanisch bearbeitet ist und die als Referenz beziehungsweise Anschlag zum passgenauen Anbau an ein Maschinenteil verwendbar ist.

Mit Vorteil umfasst der Multiturn-Drehgeber ein Kabel mit einem Schirm, der elektrisch leitend mit dem Metallkörper verbunden ist. Somit kann der Metallkörper auch eine Masseanbindung des Multiturn-Drehgebers ermöglichen.

Mit Vorteil weist der Abschnitt des Metallkörpers, welcher zwischen dem ersten und dem zweiten Bereich der Leiterplatte angeordnet ist, eine Dicke von mehr als 0,5 mm, insbesondere mehr als 1,0 mm oder mehr als 1,5 mm auf. Mit anderen Worten ist insbesondere der Abstand zwischen dem ersten Bereich der Leiterplatte und dem zweiten Bereich der Leiterplatte gleich der Dicke des Metallkörpers in dem genannten Abschnitt. Weiterhin kann der Metallkörper so aufgebaut sein, dass die erste Lage und die zweite Lage jeweils die gleiche Dicke beziehungsweise Stärke aufweisen. Vorteilhafterweise weist der Metallkörper zwischen dem ersten und dem zweiten Bereich der Leiterplatte eine Dicke auf, welche mindestens 5 mal, insbesondere mindestens 10 mal oder mindestens 15 mal, größer ist als die Dicke der Leiterplatte beziehungsweise des Substrats der Leiterplatte. Der Metallkörper ist als starrer Körper ausgebildet und bildet einen mechanischen Träger für die dünne flexible Leiterplatte und die Getriebräder. Daher umfasst der Begriff Metallkörper im Folgenden keine flexible Metallfolie.

Durch die besondere Bauweise des Multiturn-Drehgebers ist ein Herstellungsverfahren anwendbar, bei dem zunächst eine Metalltafel mit dem Substrat einer flexiblen insbesondere mehrschichtigen Leiterplatte beschichtet beziehungsweise beklebt wird, so dass auf diese Weise die Leiterplatte auf der Oberfläche der Metalltafel befestigt ist. Mit Vorteil kann der Schichtaufbau der Leiterplatte auf der Metalltafel vorgenommen werden, so dass also keine vorgefertigten Leiterplatten mit Substrat und Leiterstrukturen verwendet werden. Vielmehr werden bei dieser Variante die erforderlichen (beispielsweise fotochemischen) Prozessschritte zum Aufbau der insbesondere mehrschichtigen Leiterplatte auf der Metalltafel vorgenommen.

Danach können einzelne Metallteile zusammen mit den Leiterplatten beziehungsweise dem Substrat abgetrennt werden. Nach einer Faltung und gegebenenfalls einer Klebung ist der Metallkörper hergestellt. Die elektronischen Bauelemente können beispielsweise vor der Faltung auf der Leiterplatte montiert werden und / oder nach der Faltung. Das Substrat der Leiterplatte kann als Bogen auf die Metalltafel aufgebracht werden und kann zusammen mit der Metalltafel abgetrennt beziehungsweise vereinzelt werden. Alternativ können auch einzelne Leiterplatten auf der Metalltafel befestigt beziehungsweise aufgeklebt werden, so dass die Metalltafel um diese herum geschnitten beziehungsweise abgetrennt wird.

Vorteilhafte Ausbildungen der Erfindung entnimmt man den abhängigen Ansprüchen.

Weitere Einzelheiten und Vorteile des erfindungsgemäßen Multiturn-Drehgebers ergeben sich aus der nachfolgenden Beschreibung von Ausführungsbeispielen anhand der beiliegenden Figuren.

### KURZE BESCHREIBUNG DER ZEICHNUNGEN

Es zeigen die
- Figur 1: eine Draufsicht auf eine erste Seite eines Multiturn-Drehgeber-Bauteils in einer frühen Montagephase,
- Figur 2: eine Draufsicht auf eine zweite Seite des Multiturn-Drehgeber-Bauteils in einer frühen Montagephase,
- Figur 3: eine Draufsicht auf die zweite Seite des Multiturn-Drehgeber-Bauteils in einer darauffolgenden Montagephase,
- Figur 4: eine perspektivische Ansicht auf ein erstes und zweites Getrieberad,
- Figur 5: eine Draufsicht auf die erste Seite des Multiturn-Drehgeber-Bauteils in einer darauffolgenden Montagephase,
- Figur 6: Teilschnittdarstellung durch einen Sensor des Multiturn-Drehgebers,
- Figur 7: eine Schnittdarstellung des Multiturn-Drehgebers,
- Figur 8: eine perspektivische Ansicht auf ein erstes und zweites Getrieberad gemäß einem zweiten Ausführungsbeispiel,
- Figur 9: eine Schnittdarstellung des Multiturn-Drehgebers gemäß dem zweiten Ausführungsbeispiel.

### BESCHREIBUNG DER AUSFÜHRUNGSFORMEN

Im Zuge der Herstellung eines Multiturn-Drehgebers gemäß dem vorliegenden Ausführungsbeispiel wird zunächst eine Metalltafel, die hier eine Stärke beziehungsweise Dicke von 2,5 mm aufweist und aus weichmagnetischem Stahl (hier ein ferritischer Edelstahl) hergestellt ist, bereitgestellt. Auf dieser Metalltafel wird eine Vielzahl von flexiblen mehrschichtigen Leiterplatten 1 nach einem vorgegebenen Muster befestigt, insbesondere aufgeklebt. Jede der Leiterplatten 1 weist ein vergleichsweise dünnes Substrat (hier 0,1 mm) beispielsweise aus Polyimid auf, so dass die Leiterplatten 1 an sich flexibel sind.

Alternativ können die Leiterplatten 1 auch durch unmittelbaren Schichtaufbau auf der Metalltafel erzeugt werden.

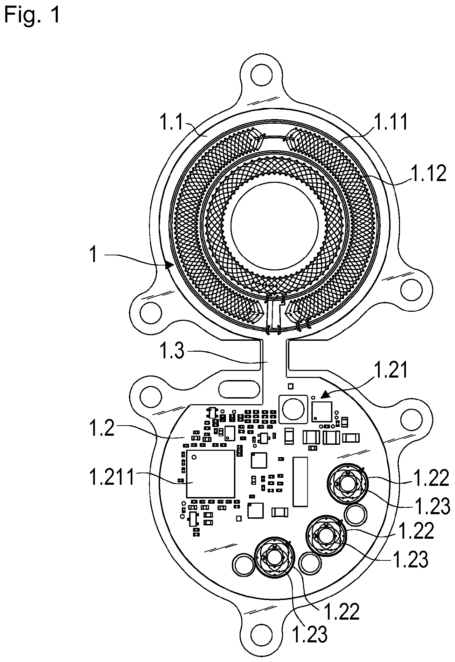

In der Figur 1 ist eine mehrschichtig aufgebaute flexible Leiterplatte 1 zu sehen. Diese ist einstückig und weist einen ersten Bereich 1.1 auf, der in erster Näherung ringförmig ausgestaltet ist. Weiterhin weist die Leiterplatte 1 einen zweiten Bereich 1.2 auf. Zwischen dem ersten Bereich 1.1 und dem zweiten Bereich 1.2 weist die Leiterplatte 1 einen dritten Bereich 1.3 auf, der als Steg ausgestaltet ist und eine Verbindung zwischen dem ersten Bereich 1.1 und dem zweiten Bereich 1.2 darstellt.

Im Fertigungszustand gemäß der Figur 1 ist das Leiterbild der Leiterplatte 1 erkennbar. Demnach sind im ersten Bereich 1.1 so genannte Erregerwindungen 1.11 und ein erster Detektor 1.12 in Form von Empfängerspulen vorgesehen, die als Leiterbahnen auf dem dünnen Substrat ausgebildet sind. Im vorgestellten Ausführungsbeispiel sind dem ersten Detektor 1.12 beziehungsweise den Empfängerspulen zwei Spuren zugeordnet.

Im zweiten Bereich 1.2 der Leiterplatte 1 sind Leiterbahnen und Pads dargestellt. Im zweiten Bereich 1.2 sind außerdem drei Multiturnsensoren angeordnet, die ebenfalls jeweils einen zweiten Detektor 1.22 in Form von Empfängerspulen und Erregerwindungen 1.23 aufweisen. Die zweiten Detektoren 1.22 und die Erregerwindungen 1.23 sind als Leiterbahnen auf dem dünnen Substrat ausgebildet.

Im dritten Bereich 1.3 der Leiterplatte 1 sind in den Figuren nicht dargestellte Leiterbahnen aufgebracht, die zur elektrischen Verbindung der Komponenten im ersten Bereich 1.1 und denen im zweiten Bereich 1.2 der Leiterplatte 1 dienen.

Im Zuge der Herstellung des Multiturn-Drehgebers können nun auf dem zweiten Bereich 1.2 elektronische Bauelemente 1.21 montiert werden, zu denen im vorgestellten Ausführungsbeispiel auch ein ASIC-Baustein 1.211 gehört.

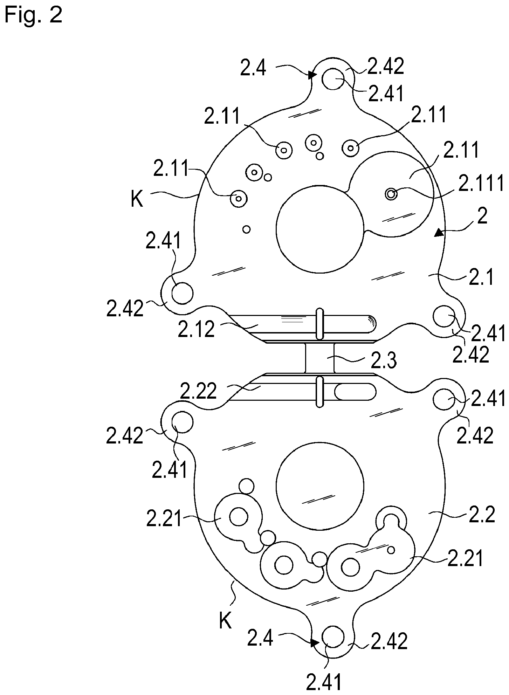

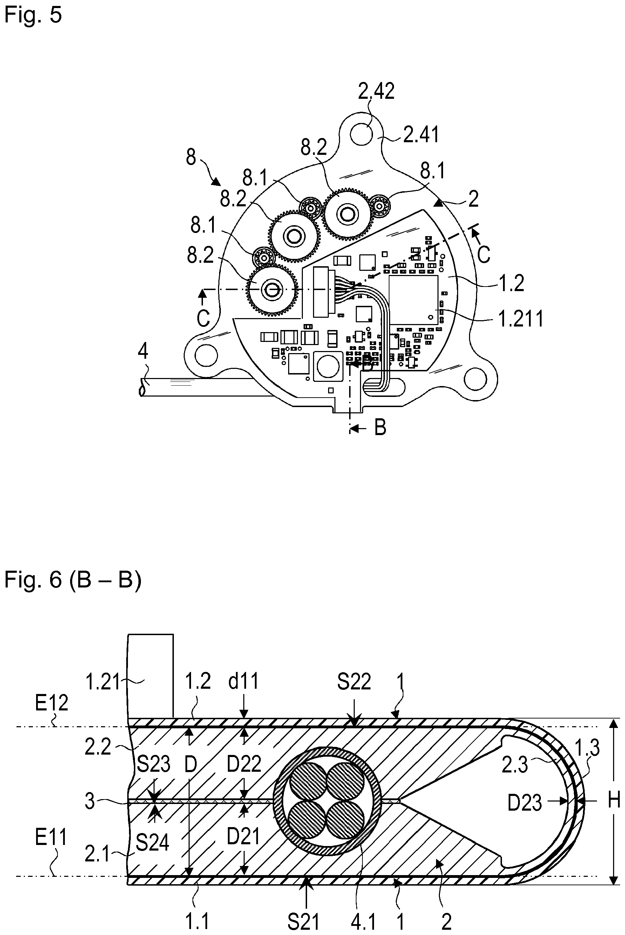

Nachdem die Vielzahl von flexiblen Leiterplatten 1 nach einem vorgegebenen Muster auf die Metalltafel aufgeklebt worden sind, wird die Metalltafel in einem darauffolgenden Herstellungsschritt mechanisch bearbeitet. Insbesondere wird die der flexiblen Leiterplatten 1 gegenüber liegende Seite, wie sie beispielsweise in der Figur 2 dargestellt ist, bearbeitet. In diesem Zusammenhang werden zunächst in die Metalltafel mehrere Ausnehmungen 2.11, 2.21; 2.11', 2.21' eingearbeitet, insbesondere mit einem Fräsprozess. Eine der Ausnehmungen 2.11 wird derart vorgenommen, dass ein zentraler Zapfen 2.111 stehen bleibt. Weiterhin wird ein Steg 2.3 hergestellt, indem an der betreffenden Stelle Material aus der Metalltafel entfernt wird. Demnach wird der Steg 2.3 des Metallkörpers 2 derart bearbeitet, dass dieser zumindest stellenweise eine reduzierte Dicke D23 (Figur 6) aufweist. Folglich ist der Metallkörper 2 im vorgestellten Ausführungsbeispiel einteilig ausgestaltet, wobei der Steg 2.3 des Metallkörpers 2 unter dem dritten Bereich 1.3 der Leiterplatte 1 angeordnet ist beziehungsweise bezüglich der Faltachse radial innen liegend.

Weiterhin werden Befestigungsmittel 2.4 in Form von Bohrungen 2.41 in Laschen 2.42 hergestellt sowie zwei zweite Ausnehmungen 2.12, 2.22. Schließlich wird aus der Metalltafel ein Metallkörper 2 entlang der Kontur K herausgetrennt, beispielsweise durch einen Fräsprozess oder einen Laser- oder Wasserstrahlschneidprozess.

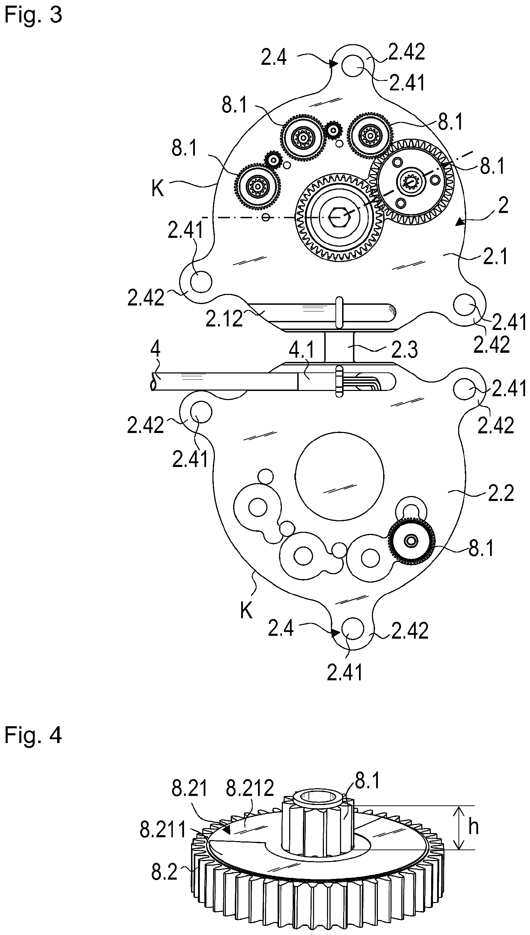

Danach werden erste Getrieberäder 8.1 und zweite Getrieberäder 8.2 bereitgestellt, die im vorgestellten Ausführungsbeispiel als Zahnräder, insbesondere Stirnräder, ausgestaltet sind. Häufig können zudem die ersten Getrieberäder 8.1 und die zweiten Getrieberäder 8.2 gemäß der Figur 4 mit einer gemeinsamen Rotationsachse als ein einstückiger Körper ausgestaltet sein. Die ersten Getrieberäder 8.1 und die zweiten Getrieberäder 8.2 haben hier jeweils eine axiale Ausdehnung h von 2,0 mm. Die zweiten Getrieberäder 8.2 weisen eine Winkelteilung 8.21 auf. Die Winkelteilung 8.21 eines jeden zweiten Getrieberades 8.2 ist kreisförmig ausgebildet. Die Winkelteilungen 8.21 bestehen jeweils aus einem elektrisch leitfähigen Bereich 8.211 und einem nichtleitfähigen Bereich 8.212. Als Material für die elektrisch leitfähigen Teilungsbereiche 8.211 wurde im gezeigten Beispiel Kupfer auf die zweiten Getrieberäder 8.2 aufgebracht. In den nichtleitfähigen Bereichen 8.212 sind die zweiten Getrieberäder 8.2 dagegen nicht beschichtet.

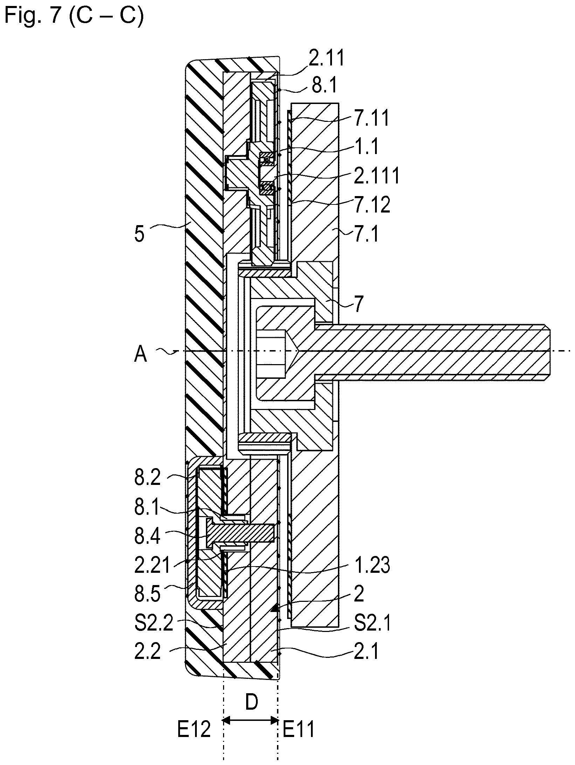

Die ersten Getrieberäder 8.1 werden wie in der Figur 3 dargestellt in die Ausnehmungen 2.11, 2.21 montiert und gehören zu einem Getriebe 8. Nach erfolgter Montage der ersten Getrieberäder 8.1 und der zweiten Getrieberäder 8.2 liegen die jeweiligen Winkelteilungen 8.21 den zweiten Detektoren 1.23 zur induktiven Abtastung der Winkelteilung 8.21 der zweiten Getrieberäder 8.2 axial gegenüber (siehe die Figur 7). Das dem späteren Antrieb am nächsten liegende erste Getrieberad 8.1 wird mit Hilfe eines kleinen Wälzlagers am Zapfen 2.111 montiert.

Im weiteren Fortgang des Herstellungsprozesses wird das Kabel, insbesondere der Schirm 4.1, in die zweite Ausnehmung 2.12 gelegt. Somit ist nicht nur eine mechanische Verbindung zwischen dem Metallkörper 2 und dem Kabel 4 hergestellt, sondern auch eine elektrische Verbindung zwischen dem Metallkörper 2 und dem Schirm 4.1.

Danach wird auf die in der Figur 3 sichtbare Seite des Metallkörpers 2 partiell ein Kleber aufgetragen und die Leiterplatte 1 und der Metallkörper 2 mit den ersten Getrieberädern 8.1 werden gemeinsam so gefaltet, dass jeweils ein Paar der Bohrungen 2.41 einer ersten Lage 2.1 und einer zweiten Lage 2.2 des Metallkörpers 2 übereinander zu liegen kommen (siehe Figur 5). Um die relative Ausrichtung der beiden Lagen 2.1, 2.2 bei Bedarf exakter zu positionieren können beispielsweise Passstifte in die Bohrungen 2.41 eingeführt werden. Alternativ oder ergänzend können auch direkt am Metallkörper 2 Passstifte oder Passnasen vorgesehen sein, die in entsprechende Passöffnungen der jeweiligen anderen Lage nach dem Falten oder während des Faltens eingreifen.

Die beschriebene Vorrichtung bestehend aus der Leiterplatte 1, dem gefalteten Metallkörper 2 mit Klebspalt 3 und dem Kabel 4 sowie dem isolierenden Material 5 wird im Folgenden als Sensor bezeichnet. In der Figur 6 ist ein Teilschnitt durch den Sensor im Bereich des Stegs 2.3 des Metallkörpers 2 (entlang der Linie B - B in Figur 5) dargestellt. Demnach umfasst der Sensor einen gefalteten Metallkörper 2, der die erste Lage 2.1 mit einer ersten Fläche S21 sowie die zweite Lage 2.2 mit einer zweiten Fläche S22 aufweist. Der erste Bereich 1.1 der Leiterplatte 1 ist auf der ersten Fläche S21 und der zweite Bereich 1.2 der Leiterplatte 1 auf der zweiten Fläche S22 aufgeklebt. Die erste Lage 2.1 und die zweite Lage 2.2 des Metallkörpers 2 sind zwischen dem ersten Bereich 1.1 und dem zweiten Bereich 1.2 der Leiterplatte 1 angeordnet, so dass der erste Bereich 1.1 in einer ersten Ebene E11 und der zweite Bereich 1.2 in einer zweiten Ebene E12 angeordnet sind. Zwischen der ersten Lage 2.1 und die zweiten Lage 2.2 des Metallkörpers 2 befindet sich ein Klebespalt 3. Die erste Ebene E11 und die zweite Ebene E12 sind im vorgestellten Ausführungsbeispiel parallel zueinander angeordnet.

Außerdem weist die erste Lage 2.1 des Metallkörpers 2 eine dritte Fläche S23 auf und die zweite Lage 2.2 des Metallkörpers 2 weist eine vierte Fläche S24 auf. Die dritte Fläche S23 und die vierte Fläche S24 sind einander zugewandt angeordnet und durch den Klebespalt 3 voneinander beabstandet.

Weiterhin weist die erste Lage 2.1 des Metallkörpers 2 die Ausnehmungen 2.11 auf und die zweite Lage 2.2 die Ausnehmungen 2.21.

Dadurch, dass der Steg 2.3 des Metallkörpers 2 eine reduzierte Stärke D23 aufweist ist dieser flexibel, so dass der Metallkörper 2 zusammen mit der flexiblen Leiterplatte 1 beziehungsweise dem Steg 1.3 der Leiterplatte 1 problemlos gebogen werden kann. Im vorgestellten Ausführungsbeispiel ist die Stärke beziehungsweise Dicke D21 der ersten Lage 2.1 mit 2,5 mm genau so groß wie die Dicke D22 der zweiten Lage 2.2. Die Dicke D23 der dritten Lage 2.3 beträgt hier 0,1 mm. Die Leiterplatte 1 beziehungsweise das Substrat der Leiterplatte 1 weist hier eine Dicke d11 von 0,05 mm oder 50 µm auf. Nachdem der Klebespalt 3 etwa 0,05 mm dick ist, ergibt sich eine Gesamtdicke des Metallkörpers 2 von etwa 5,05 mm, so dass also der Metallkörper 2 zwischen dem ersten und dem zweiten Bereich 1.1, 1.2 der Leiterplatte 1 eine Dicke D aufweist, welche etwa 100 mal größer ist als die Dicke d11 der Leiterplatte 1 beziehungsweise des Substrats der Leiterplatte 1.

Nach dem oben beschriebenen Falten befinden sich die abtriebsseitigen ersten Getrieberäder 8.1 über ihre axiale Ausdehnung h hinweg innerhalb der Ausnehmungen 2.11, 2.21 die sich bezogen auf die axiale Richtung zwischen der ersten Ebene E11 und der zweiten Ebene E12 befinden.

Nach diesem Herstellungsschritt werden die Körper, welche als integralen Bestandteil erste Getrieberäder 8.1 und zweite Getrieberäder 8.2 aufweisen (Figur 4) von der der ersten Fläche S21 des Metallkörpers 2 her jeweils in der Ausnehmung 2.21 der zweiten Lage 2.2 montiert. Im Ergebnis ist dann ein erstes Getrieberad 8.1 (siehe etwa die Figur 7) über seine axiale Ausdehnung h hinweg innerhalb der Ausnehmung 2.21 der zweiten Lage 2.2 angeordnet. Dabei befindet sich diese Ausnehmung 2.11 zwischen der ersten Ebene E11 und der zweiten Ebene E12, bezogen auf die axiale Richtung, also bezogen auf die Richtung der Drehachse A. Über den zweiten Getrieberädern 8.2 wird jeweils ein Deckel 8.5 montiert.

Der gefaltete Metallkörper 2 kann nun etwa mit elektrisch isolierendem Material 5 umspritzt werden, so dass die elektronischen Bauelemente 1.21 sowie der Anschluss des Kabels 4 vor äußeren Einflüssen geschützt sind.

Alternativ kann ein Umspritzen beziehungsweise ein Vergießen der elektronischen Bauelemente 1.21 auch schon in einem früheren Herstellungsschritt vorgenommen werden, etwa vor dem Heraustrennen des Metallkörpers 2 aus der Metalltafel entlang der Kontur K um so die elektronischen Bauelemente 1.21 in diesem Stadium vor äußeren Einflüssen zu schützen.

Der Sensor kann nun beispielsweise an einem Maschinenteil, etwa an einem Motorgehäuse, befestigt werden. Besonders vorteilhaft ist für diesen Zweck die Ausgestaltung des Metallkörpers 2 mit den Befestigungsmitteln 2.4 in Form von Bohrungen 2.41 in Laschen 2.42, die als Flansch wirken. Zudem kann die exakt bearbeitete Kontur K zumindest bereichsweise als Anschlagfläche dienen, so dass der Monteur des Sensors die Laschen 2.42 mit ihrer Kontur K lediglich an entsprechend vorbereiteten Flächen des Maschinenteils zum Anschlag bringen muss und anschließend durch die Bohrungen 2.41 Schrauben in Gewindebohrungen des Maschinenteil dreht. Auf diese Weise ist eine einfache und präzise Montage des Sensors möglich.

In der Figur 7 ist ein Schnitt-Bild eines Multiturn-Drehgebers dargestellt, welcher den Sensor und eine relativ dazu bewegbare (hier relativ zum Sensor drehbare) Winkelskala 7.1 umfasst. Die Winkelskala 7.1 besteht aus einem Substrat, welches im dargestellten Ausführungsbeispiel aus Epoxydharz hergestellt ist, und auf welchem zwei Teilungsspuren 7.11, 7.12 angeordnet sind. Die Teilungsspuren 7.11, 7.12 sind kreisförmig ausgebildet und bezüglich einer Drehachse A konzentrisch mit unterschiedlichen Durchmessern auf dem Substrat angeordnet. Die beiden Teilungsspuren 7.11, 7.12 bestehen jeweils aus einer periodischen Abfolge von alternierend angeordneten elektrisch leitfähigen Teilungsbereichen und nichtleitfähigen Teilungsbereichen. Als Material für die elektrisch leitfähigen Teilungsbereiche wurde im gezeigten Beispiel Kupfer auf das Substrat aufgebracht. In den nichtleitfähigen Teilungsbereichen wurde das Substrat dagegen nicht beschichtet.

Üblicherweise dient die Winkelskala 7.1 beziehungsweise die Winkelskalierung als Rotor und wird an einem um die Drehachse A drehbaren Maschinenteil befestigt. Dagegen bildet dann der Sensor den Stator des Multiturn-Drehgebers, so dass dieser an einem stehenden Maschinenteil fixiert wird. Im zusammengebauten Zustand des Multiturn-Drehgebers stehen sich die Winkelskala 7.1 und der Sensor mit vergleichsweise geringem Luftspalt einander gegenüber. Die Drehachse A verläuft durch das Zentrum der Welle 7 beziehungsweise der Winkelskalierung, wobei bei einer Relativdrehung zwischen dem Winkelskala 7.1 und dem Sensor in der Leiterplatte 1 ein von der jeweiligen Winkelstellung abhängiges Signal durch Induktionseffekte erzeugbar ist.

Damit die Winkelstellung über mehrere Umdrehungen hinweg erfasst werden kann weist der Multiturn-Drehgeber das Getriebe 8 auf, das von der Welle 7 angetrieben wird. Zu diesem Zweck ist in die Welle 7 im vorgestellten Ausführungsbeispiel eine Außenverzahnung eingearbeitet, die mit einem ersten Getrieberad 8.1 kämmt. Dieses leitet die Drehbewegung untersetzt letztendlich an die zweiten Getrieberäder 8.2 weiter, die eine Winkelteilung 8.21 aufweisen. Im vorgestellten Ausführungsbeispiel werden die Winkelteilungen 8.21 induktiv gescannt und so eine jeweilige Winkelstellung der zweiten Getrieberäder 8.2 bestimmt. Durch die Ermittlung der Winkelstellung der zweiten Getrieberäder 8.2 des Getriebes 8 kann dann die Winkelstellung der Welle 7 über viele Umdrehungen hinweg bestimmt werden. Dabei wirkt das Getriebe 8 als Untersetzungsgetriebe, so dass die Drehzahlen der Getrieberäder 8.1, 8.2 kleiner sind als die der Welle 7.

Der auf der Leiterplatte 1 montierte ASIC-Baustein 1.211 arbeitet nicht nur als Auswerteelement, sondern auch als Erregerkontrollelement, unter dessen Kontrolle der Erregerstrom, welcher dann durch die Erregerwindungen 1.11 fließt, erzeugt wird. Durch den Erregerstrom werden im ersten Detektor 1.12 Spannungen in Abhängigkeit von der Winkelstellung der Welle 7 beziehungsweise der Winkelskalierung induziert, wobei diese Spannungen beziehungsweise Signale durch Bauelemente 1.21, die im zweiten Bereich 1.2 der Leiterplatte 1 montiert sind verstärkt, demoduliert und in digitale Signale gewandelt werden. In logischen Schaltungen auf dem Digitalteil des ASIC-Bausteins 1.211 werden die Positionswerte resultierend aus der Abtastung der einzelnen Teilungsspuren ermittelt beziehungsweise berechnet. Die Ermittlung der jeweiligen Winkelstellungen der zweiten Getrieberäder 8.2 wird nach analogen Prinzip wie die Singleturn-Abtastung vorgenommen.

Die Positionswerte können über das Kabel 4 an eine Folgeelektronik, beispielsweise eine Numerische Steuerung einer Maschine, übertragen werden. Eine mit dem Sensor ausgestattete Winkelmesseinrichtung dient demnach zur Erfassung einer Winkelposition zwischen dem Sensor, der an einem Maschinenteil festlegbar ist und der Winkelskala 7.1, die an einem zweiten Maschinenteil, etwa einer Motorwelle, festlegbar ist. Auf die beschriebene Weise kann die Winkelstellung der Welle 7 innerhalb einer Umdrehung vergleichsweise genau gemessen werden.

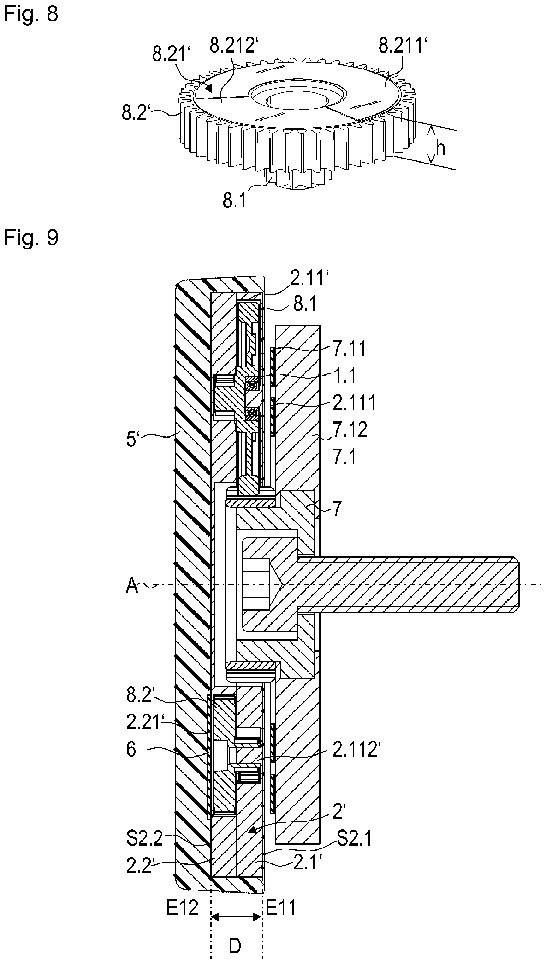

Anhand der Figuren 8 und 9 wird eine alternative Ausgestaltung des Sensors beschrieben. Bei dieser Variante werden im Vergleich zum ersten Ausführungsbeispiel anders gestaltete zweite Getrieberäder 8.2' verwendet, wie in der Figur 8 dargestellt. Diese zweiten Getrieberäder 8.2' weisen jeweils auf derjenigen Seite, die den ersten Getrieberädern 8.1 abgewandt ist, eine Winkelteilung 8.21' auf. Diese besteht wie im ersten Ausführungsbeispiel jeweils aus einem elektrisch leitfähigen Bereich 8.211' und einem nichtleitfähigen Bereich 8.212'.

Der Metallkörper 2' des Multiturn-Drehgebers des zweiten Ausführungsbeispiels unterscheidet sich von denjenigen des ersten Ausführungsbeispiels unter anderem dadurch, dass in der ersten Lage 2.1' Zapfen 2.112' (Figur 9) vorgesehen sind, die zur Lagerung der einstückig miteinander verbundenen ersten Getrieberäder 8.1 und der zweiten Getrieberäder 8.2' mit der Winkelteilung 8.21' dienen. Weiterhin weist die zweite Lage 2.2' vergleichsweise große Ausnehmungen 2.21' auf, in welchen die zweiten Getrieberäder 8.2' angeordnet sind. Im vorgestellten zweiten Ausführungsbeispiel befinden sich sowohl die ersten Getrieberäder 8.1 als auch die zweiten Getrieberäder 8.2' über ihre axiale Ausdehnung h hinweg innerhalb der Ausnehmungen 2.11', 2.21', die sich bezogen auf die axiale Richtung zwischen der ersten Ebene E11 und der zweiten Ebene E12 befinden.

Die Abtastung der Winkelteilungen 8.21' der zweiten Getrieberäder 8.2' erfolgt über einen Multiturnsensor 6', der Erregerwindungen und als zweite Detektoren Empfängerspulen auf einem Leiterplattensubstrat umfasst. Der Multiturnsensor 6' wird auf die zweite Fläche S22 des Metallkörpers 2' platziert und mit der erforderlichen Elektronik kontaktiert bevor isolierendes Material 5' mittels Umspritzung zum Schutz des Metallkörpers 2' und der Leiterplatte 1 aufgebracht wird.

## Patentansprüche

1. Multiturn-Drehgeber zur Messung einer Winkelstellung einer Welle (1), die um eine Achse (A) drehbar ist, wobei an der Welle (7) drehfest eine erste Winkelskala (7.1) befestigt ist, die von einem ersten Detektor (1.12) abtastbar ist, wobei der Multiturn-Drehgeber weiterhin ein Getriebe (8), einen Metallkörper (2; 2') und eine Leiterplatte (1) aufweist, und
die Leiterplatte (1) einen ersten Bereich (1.1) aufweist, in dem der erste Detektor (1.12) angeordnet ist und einen zweiten Bereich (1.2) aufweist, in dem elektronische Bauelemente (1.21) angeordnet sind, welche elektrisch mit dem ersten Detektor (1.12) verbunden sind,
der Metallkörper (2; 2') zumindest eine Ausnehmung (2.11, 2.21; 2.11', 2.21'), eine erste Lage (2.1) mit einer ersten Fläche (S21) sowie eine zweite Lage (2.2, 2.2') mit einer zweiten Fläche (S22) aufweist,
der erste Bereich (1.1) der Leiterplatte (1) auf der ersten Fläche (S21) befestigt ist und der zweite Bereich (1.2) der Leiterplatte (1) auf der zweiten Fläche (S22) befestigt ist, so dass der erste Bereich (1.1) in einer ersten Ebene (E11) und der zweite Bereich (1.2) in einer zweiten Ebene (E12) angeordnet sind und
das Getriebe (8) von der Welle (7) antreibbar ist, wobei dieses zumindest ein abtriebsseitiges Getrieberad (8.1, 8.2; 8.2') aufweist, welches über seine axiale Ausdehnung (h) hinweg zumindest teilweise innerhalb der Ausnehmung (2.11, 2.21; 2.11', 2.21') angeordnet ist, wobei sich die Ausnehmung (2.11, 2.21; 2.11', 2.21') bezogen auf die axiale Richtung zwischen der ersten Ebene (E11) und der zweiten Ebene (E12) befindet.

2. Multiturn-Drehgeber gemäß dem Anspruch 1, wobei die erste Lage (2.1) die Ausnehmung (2.11) und / oder die zweite Lage (2.2) die Ausnehmung (2.21) aufweist.

3. Multiturn-Drehgeber gemäß einem der vorhergehenden Ansprüche, wobei das Getriebe (8) zumindest ein erstes Getrieberad (8.1) und ein zweites Getrieberad (8.2; 8.2') aufweist, wobei das zweite Getrieberad (8.2; 8.2') eine Winkelteilung (8.21; 8.21') aufweist und das zweite Getrieberad (8.2; 8.2') über seine axiale Ausdehnung (h) hinweg zumindest teilweise innerhalb der Ausnehmung (2.11, 2.21; 2.11', 2.21') angeordnet ist.

4. Multiturn-Drehgeber gemäß einem der vorhergehenden Ansprüche, wobei das Getriebe (8) zumindest jeweils ein erstes Getrieberad (8.1) und ein zweites Getrieberad (8.2; 8.2') aufweist, wobei das erste Getrieberad (8.1) und das zweite Getrieberad (8.2; 8.2') jeweils als ein Zahnrad, insbesondere als ein Stirnrad, ausgebildet sind.

5. Multiturn-Drehgeber gemäß einem der vorhergehenden Ansprüche, wobei am Metallkörper (2; 2') in der zumindest einen Ausnehmung (2.11, 2.21; 2.11', 2.21') ein Zapfen (2.111; 2.112') angeformt ist, der zur Lagerung eines Getrieberads (8.1, 8.2; 8.2') dient.

6. Multiturn-Drehgeber gemäß einem der vorhergehenden Ansprüche, wobei der Multiturn-Drehgeber auf einem induktiven Messprinzip basiert und der erste Detektor (1.12) in Form von Empfängerspulen ausgebildet ist.

7. Multiturn-Drehgeber gemäß einem der vorhergehenden Ansprüche, wobei der Metallkörper (2; 2') aus weichmagnetischem Stahl hergestellt ist.

8. Multiturn-Drehgeber gemäß einem der Ansprüche 6 oder 7, wobei im ersten Bereich (1.1) der Leiterplatte (1) Erregerwindungen (1.11) angeordnet sind.

9. Multiturn-Drehgeber gemäß dem Anspruch 8, wobei im zweiten Bereich (1.2) elektronische Bauelemente (1.21) angeordnet sind, welche elektrisch mit den Erregerwindungen (1.11) verbunden sind.

10. Multiturn-Drehgeber gemäß einem der vorhergehenden Ansprüche, wobei die Leiterplatte (1) flexibel und einstückig ausgestaltet ist und einen gebogenen Verbindungssteg (1.3) zwischen dem ersten Bereich (1.1) und dem zweiten Bereich (1.2) aufweist.

11. Multiturn-Drehgeber gemäß einem der vorhergehenden Ansprüche, wobei zumindest ein zweites Getrieberad (8.2; 8.2') eine Winkelteilung (8.21; 8.21') aufweist, so dass dessen Winkelstellung durch einen zweiten Detektor, welcher auf einem induktiven Messprinzip basiert, bestimmbar ist.

12. Multiturn-Drehgeber gemäß einem der vorhergehenden Ansprüche, wobei der Metallkörper eine Dicke von mehr als 0,5 mm aufweist.

13. Multiturn-Drehgeber gemäß einem der vorhergehenden Ansprüche, wobei die erste Lage (2.1) des Metallkörpers (2; 2') eine dritte Fläche (S23) aufweist und die zweite Lage (2.2, 2.2') des Metallkörpers (2; 2') eine vierte Fläche (S24) aufweist, wobei die dritte Fläche (S23) und die vierte Fläche (S24) einander zugewandt angeordnet sind.

14. Multiturn-Drehgeber gemäß einem der vorhergehenden Ansprüche, wobei die erste Lage (2.1) des Metallkörpers (2; 2') eine dritte Fläche (S23) aufweist und die zweite Lage (2.2, 2.2') des Metallkörpers (2; 2') eine vierte Fläche (S24) aufweist, wobei die erste Fläche (S21), die zweite Fläche (S22), die dritte Fläche (S23) und die vierte Fläche (S24) parallel zueinander angeordnet sind.

15. Multiturn-Drehgeber gemäß einem der vorhergehenden Ansprüche, wobei der Metallkörper (2; 2') weiterhin Befestigungsmittel (2.4) zur mechanischen Befestigung des Multiturn-Drehgebers an einem Maschinenteil aufweist.

## Claims

1. Multi-turn rotary encoder for measuring an angular position, of a shaft (1) which can be rotated about an axis (A), wherein a first angular scale (7.1) which can be scanned by a first detector (1.12) is fastened to the shaft (7) in a rotationally fixed manner, wherein the multi-turn rotary encode also has a gear (8), a metal body (2; 2') and a printed circuit board (1), and
the printed circuit board (1) has a first region (1.1), in which the first detector (1.12) is arranged, and a second region (1.2), in which electronic components (1.21) which are electrically connected to the first detector (1.12) are arranged,
the metal body (2; 2') has at least one recess (2.11, 2.21; 2.11', 2.21'), a first layer (2.1) having a first surface (S21) and a cond layer (2.2, 2.2') having a second surface (S22),
the first region (1.1) of the printed circuit board (1) is fastened on the first surface (S21) and the second region (1.2) of the printed circuit board (1) is fastened on the second surface (S22), with the result that the first region (1.1) is arranged in a first plane (E11) and the second region (1.2) is arranged in a second plane (E12), and
the gear (8) can be driven by the shaft (7), wherein the gear has at least one output-side gear wheel (8.1, 8.2; 8.2') which is at least partially arranged inside the recess (2.11, 2.21; 2.11', 2.21') over its axial extent (h), wherein the recess (2.11, 2.21; 2.11', 2.21') is between the first plane (E11) and the second plane (E12) based on the axial direction.

2. Multi-turn rotary encoder according to Claim 1, wherein the first layer (2.1) has the recess (2.11) and/or the second layer (2.2) has the recess (2.21).

3. Multi-turn rotary encoder according to one of the preceding claims, wherein the gear (8) has at least one first gear wheel (8.1) and one second gear wheel (8.2; 8.2'), wherein the second gear wheel (8.2; 8.2') has an angular division (8.21; 0.21') and the second gear wheel (8.2; 8.2') is at least partially arranged inside the recess (2.11, 2.1; 2.11', 2.21') over its axial extent (h).

4. Multi-turn rotary encoder according to one of the preceding claims, wherein the gear (8) at least respectively has a first gear wheel (8.1) and a second gear wheel (8.2; 8.2'), wherein the first gear wheel (8.1) and the second gear wheel (8.2; 8.2') are each in the form of a toothed wheel, in particular in the form of a spur wheel.

5. Multi-turn rotary encoder according to one of the preceding claims, wherein a pin (2.111; 2.112') is formed on the metal body (2; 2') in the at least one recess (2.11, 2.21; 2.11', 2.21') and is used to mount a gear wheel (8.1, 8.2; 8.2').

6. Multi-turn rotary encoder according to one of the preceding claims, wherein the multi-turn rotary encoder is based on an inductive measurement principle and the first detector (1.12) is in the form of receiver coils.

7. Multi-turn rotary encoder according to one of the preceding claims, wherein the meter body (2; 2') is produced from soft magnetic steel.

8. Multi-turn rotary encoder according to either of Claims 6 and 7, wherein field windings (1.11) are arranged in the first region (1.1) of the printed circuit board (1).

9. Multi-turn rotary encoder according to Claim 8, wherein electronic components (1.21) which are electrically connected to the field windings (1.11) are arranged in the second region (1.2).

10. Multi-turn rotary encoder according to one or the preceding claims, wherein the printed circuit board (1) has a flexible and single-part design and has a curved connecting web (1.3) between the first region (1.1) and the second region (1.2).

11. Multi-turn rotary encoder according to one of the preceding claims, wherein at least one second gear wheel (8.2; 8.2') has an angular vision (8.21; 8.21'), with the result that its angular position can be determined by a second detector which is based on an inductive measurement principle.

12. Multi-turn rotary encoder according to one of the preceding claims, wherein the metal body has a thickness of more than 0.5 mm.

13. Multi-turn rotary encoder according to one of the preceding claims, wherein the first layer (2.1) of the metal body (2; 2') has a third surface (S23) and the second layer (2.2, 2.2') of the metal body (2; 2') has a fourth surface (S24), wherein the third surface (S23) and the fourth surface (S24) are arranged in a manner facing one another.

14. Multi-turn rotary encoder according to one of the preceding claims, wherein the first layer (2.1) of the metal body (2; 2') has a third surface (S23) and the second layer (2.2, 2.2') of the metal body (2; 2') has a fourth surface (S24), wherein the first surface (S21), the second surface (S22), the third surface (S23) and the fourth surface (S24) are arranged parallel to one another.

15. Multi-turn rotary encoder according to one of the preceding claims, wherein the metal body (2; 2') also has fastening means (2.4) for mechanical fastening the multi-turn rotary encoder to a machine part.

## Revendications

1. Codeur rotatif multitour servant à la mesure d'une position angulaire d'un arbre (1) qui peut tourner autour d'un axe (A), une première échelle angulaire (7.1) étant fixée à l'arbre (7) de manière solidaire en rotation, laquelle échelle peut être balayée par un premier détecteur (1.12), le codeur rotatif multitour comprenant en outre une transmission (8), un corps métallique (2 ; 2') et une carte de circuits imprimés (1), et
la carte de circuits imprimés (1) comprenant une première région (1.1) dans laquelle le premier détecteur (1.12) est disposé et une deuxième région (1.2) dans laquelle des composants électroniques (1.21) sont disposés, lesquels sont connectés électriquement au premier détecteur (1.12),
le corps métallique (2 ; 2') comprenant au moins un évidement (2.11, 2.21 ; 2.11', 2.21'), une première couche (2.1) dotée d'une première face (S21) ainsi qu'une deuxième couche (2.2, 2.2') dotée d'une deuxième face (S22)_{,}
la première région (1.1) de la carte de circuits imprimés (1) étant fixée sur la première face (S21) et la deuxième région (1.2) de la carte de circuits imprimés (1) étant fixée sur la deuxième face (S22), de telle sorte que la première région (1.1) soit disposée dans un premier plan (E11) et que la deux région (1.2) soit disposée dans un deuxième plan (E12) et
la transmission (8) pouvant être entraînée par l'arbre (7), celle-ci comprenant au moins une roue de transmission (8.1, 8.2 ; 8.2') côté sortie, laquelle roue de transmission est disposée au moins partiellement à l'intérieur de l'évidement (2.11, 2.21 ; 2.11', 2.21') au-delà de son étendue axiale (h), l'évidement (2.11, 2.21 ; 2.11', 2.21*'*) se trouvant entre le premier plan (E11) et le deuxième plan (E12) par rapport a la direction axiale.

2. Codeur rotatif multitour selon la revendication 1, dans lequel la première couche (2.1) comprend l'évidement (2.11) et/ou la deuxième couche (2.2) comprend l'évidement (2.21).

3. Codeur rotatif multitour selon l'une des revendications précédentes, dans lequel la transmission (8) comprend au moins une première roue de transmission (8.1) et une deuxième roue de transmission (8.2 ; 8.2'), la deuxième roue de transmission (8.2 ; 8.2') comprenant, une graduation angulaire (8.21 ; 8,21') et la deuxième roue de transmission (8.2 ; 8.2') étant disposée au moins partiellement à l'intérieur de l'évidement (2.11, 2.21 ; 2.11', 2.21') au-delà de son étendue axiale (h).

4. Codeur rotatif multitour selon l'une des revendications précédentes, dans lequel la transmission (8) comprend au moins respectivement une première roue de transmission (8.1) et une deuxième roue de transmission (8.2 ; 8.2'), la première roue de transmission (8.1) et la deuxième roue de transmission (8.2 ; 8.2') étant réalisées respectivement sous la forme d'une roue dentée, en particulier sous la forme d'une roue droite.

5. Codeur rotatif multitour selon l'une des revendications précédentes, dans lequel un tourillon (2.111 ; 2.11.2') est forme sur le corps métallique (2 ; 2') dans l'au moins un évidement (2.11, 2.21 ; 2.11', 2,21'), lequel tourillon sert au support d'une roue de transmission (8.1, 8.2 ; 8.2').

6. Codeur rotatif multitour selon l'une des revendications précédentes, dans lequel le codeur rotatif multitour est basé sur un principe de mesure inductif et le premier détecteur (1.12) est réalisé sous la forme de bobines réceptrices.

7. Codeur rotatif multitour selon l'une des revendications précédentes, dans lequel le corps métallique (2 ; 2') est fabriqué à partir d'acier magnétiquement doux.

8. Codeur rotatif multitour selon l'une des revendications 6 ou 7, dans lequel des enroulements d'excitation (1.11) sont disposés dans la première région (1.1) de la carte de circuits imprimés (1).

9. Codeur rotatif multitour selon la revendication 8, dans lequel des composants électroniques (1.21) sont disposés dans la deuxième région (1.2), lesquels sont connectés électriquement aux enroulements d'excitation (1.11).

10. Codeur rotatif multitour selon l'une des revendications précédentes, dans lequel la carte de circuits imprimés (1) est configurée de manière souple et d'un seul tenant et comprend une nervure de connexion incurvée (1.3) entre la première région (1.1) et la deuxième région (1.2).

11. Codeur rotatif multitour selon l'une des revendications précédentes, dans lequel au moins une deuxième roue de transmission (8.2 ; 8.2') comprend une graduation angulaire (8.21 ; 8.21'), de telle sorte que sa position angulaire puisse être déterminée au moyen d'un deuxième détecteur, lequel est basé sur un principe de mesure inductif.

12. Codeur rotatif multitour selon l'une des cations précédentes, dans lequel le corps métallique présente une épaisseur de plus de 0, 5 mm.

13. Codeur rotatif multitour selon l'une des revendications précédentes, dans lequel la première couche (2.1) du corps métallique (2 ; 2') comprend une troisième face (S23) et la deuxième couche (2.2, 2.2') du corps métallique (2 ; 2') comprend une quatrième face (S24), la troisième face (S23) et la quatrième face (S24) étant tournées l'une vers l'autre.

14. Codeur rotatif multitour selon l'une des revendications précédentes, dans lequel la première couche (2.1) du corps métallique (2 ; 2') comprend une troisième face (S23) et la deuxième couche (2.2, 2,2') du corps métallique (2 ; 2') comprend une quatrième face (S24), dans lequel la première face (S21), la deuxième face (S22), la troisième face (S23) et la quatrième, face (S24) sont disposées parallèlement les unes aux autres.

15. Codeur rotatif multitour selon l'une des revendications précédentes, dans lequel le corps métallique (2 ; 2') comprend en outre des moyens de fixation (2.4) servant à la fixation mécanique du codeur rotatif multitour à une partie de machine.
